# EUROPÄISCHE PATENTSCHRIFT

(11) **EP 1 659 305 B1**
(45) Veröffentlichungstag und Bekanntmachung des Hinweises auf die Patenterteilung: **17.09.2008**
(21) Anmeldenummer: 05023726.2
(22) Anmeldetag: 29.10.2005
(51) Int. Cl.: F16D 13/58

(54) **Reibungskupplung**
Friction clutch
Embrayage à friction

(30) Priorität: 23.11.2004 DE 102004056656
(43) Veröffentlichungstag der Anmeldung: 24.05.2006
(73) Patentinhaber: LuK Lamellen und Kupplungsbau Beteiligungs KG, 77815 Bühl (DE)
(72) Erfinder: Liebermann, Tom, 77815 Bühl (DE); Kimmig, Karl-Ludwig, 77883 Ottenhöfen (DE)

(56) Entgegenhaltungen:
- DE-A1- 4 013 186
- US-A- 5 148 904
- PATENT ABSTRACTS OF JAPAN Bd. 014, Nr. 181 (M-0961), 11. April 1990 (1990-04-11) & JP 02 031025 A (DAIKIN MFG CO LTD), 1. Februar 1990 (1990-02-01)

## Beschreibung

Die Erfindung betrifft eine Reibungskupplung, insbesondere für Kraftfahrzeuge, mit einer gegenüber einem Gehäuse drehfesten, jedoch axial begrenzt verlagerbaren Druckplatte, die über eine am Gehäuse verschwenkbar abgestützte Tellerfeder in Richtung einer im montierten Zustand der Reibungskupplung auf einem Schwungrad zwischen letzterem und der Druckplatte angeordneten Kupplungsscheibe beaufschlagbar ist, wobei zumindest ein weiteres Federelement vorhanden ist, welches beim Betätigen der Reibungskupplung zumindest über einen Teilbereich des Betätigungsvorganges den zum Betätigen der Reibungskupplung notwendigen Kraftverlauf beeinflusst. Die Überlagerung des Kraftverlaufes zweier Federelemente ist beispielsweise durch die DE 40 13 186 C2 und die DE 39 91 022 C2 bekannt geworden. Die Überlagerung des zu einer Anpresstellerfeder parallel geschalteten zweiten Federelementes dient dabei zur Begrenzung der infolge von Belagverschleiß über die Lebensdauer der Reibungskupplung auftretenden Ausrückkrafterhöhung.

Zur Erreichung einer niedrigen maximalen Ausrückkraft bzw. eines niedrigen Ausrückkraftverlaufes werden in den meisten Fällen bei Reibungskupplungen Tellerfedern eingesetzt, die zumindest im Neuzustand über einen wesentlichen Teil des Ausrückweges einen Kraftabfall bzw. einen degressiven Kraft-Weg-Verlauf aufweisen. Durch den Einsatz derartiger Federn ist jedoch in vielen Fällen im Ausrückkraftverlauf eine Überhöhung bzw. ein Maximum vorhanden, dem nach Durchfahren eines bestimmten Ausrückweges ein Minimum folgt, wobei die Differenz zwischen Kraft-Maximum und Kraft-Minimum erheblich sein kann. Das Verhältnis zwischen diesen Werten kann in der Größenordnung von 1,5 bis 2,5 betragen und in einigen Fällen gar größer sein.

Größere Schwankungen im Ausrückkraftverlauf sind in den meisten Fällen unerwünscht, da infolge der Kraftüberhöhung bei automatisierten Reibungskupplungen entsprechend stabilere Betätigungselemente und Motoren mit größerer Leistung notwendig sind. Bei fußbetätigten Kupplungen sind zu große Kraftschwankungen während der Kupplungsbetätigung ebenfalls störend.

Der vorliegenden Erfindung lag die Aufgabe zugrunde, eine Reibungskupplung zu schaffen, die über den vollen Ausrückweg, inklusive der möglichen Wegtoleranzen, eine möglichst niedrige und/oder über einen wesentlichen Teil des Ausrückweges möglichst konstante Ausrückkraft bzw. einen entsprechenden Ausrückkraftverlauf aufweist, wobei das hierfür verwendete zweite Federelement in besonders einfacher und kostengünstiger Weise herstellbar und in die Kupplung integrierbar sein soll. Das weitere Federelement soll dabei insbesondere in Zusammenhang mit so genannten selbstnachstellenden Reibungskupplungen verwendbar sein.

Bei einer Reibungskupplung der eingangs genannten Art werden die der vorliegenden Erfindung zugrunde liegenden Aufgaben zunächst zumindest teilweise dadurch gelöst, dass das weitere Federelement durch wenigstens eine membranartige Feder gebildet ist, die einerseits am Gehäuse und andererseits an der Tellerfeder derart abgestützt ist, dass während einer beim Betätigen der Reibungskupplung stattfindenden Konizitätsveränderung der Tellerfeder die membranartige Feder sowohl in axialer Richtung als auch in radialer Richtung eine elastische Materialverformung erfährt. Durch die Überlagerung einer axialen und radialen, elastischen Materialverformung können vorteilhafte Federkennlinien erzeugt werden, welche durch entsprechende Ausgestaltung des membranartigen Federelementes an den jeweiligen Einsatzfall angepasst werden können. Durch den Einsatz einer membranartigen Feder und der vorerwähnten Überlagerung von elastischen axialen und radialen Verformungen, können auch verhältnismäßig lange Kennlinien bereitgestellt werden.

Für die Ausgestaltung der membranartigen Feder und die von dieser erzeugbaren Kraftkennlinie kann es zweckmäßig sein, wenn die membranartige Feder in der Reibungskupplung derart angeordnet ist, dass sie mit radial äußeren Bereichen mit dem Kupplungsdeckel fest verbunden werden kann und sich mit radial weiter innen liegenden Bereichen an radial nach innen gerichteten Zungen der Tellerfeder abstützen kann. Durch eine derartige Festlegung der membranartigen Feder innerhalb der Reibungskupplung wird gewährleistet, dass beim Verschwenken der Tellerfeder auch die membranartige Feder eine elastische Verformung erfährt. Die membranartige Feder kann in vorteilhafter Weise einen in sich geschlossenen, ringartigen Bereich besitzen, von dem radial hervorstehende Abschnitte ausgehen, welche infolge einer Konizitätsveränderung der Tellerfeder zumindest in radialer Richtung auf elastische Knickung beansprucht werden. Eine für die Funktion, die Herstellung und die Befestigung am Deckel zweckmäßige Ausgestaltung der membranartigen Feder kann darin bestehen, dass diese einen in sich geschlossenen, ringartigen Grundkörper aufweist, von dem zumindest drei sternartig über den Umfang des Grundkörpers verteilte und radial nach außen verlaufende Ausleger ausgehen, welche radial außen mit dem Kupplungsgehäuse fest verbunden sind. Im unverspannten Zustand kann die membranartige Feder dabei eine zumindest im Wesentlichen kegelstumpfförmige Gestalt aufweisen, wobei der ringartige Grundkörper infolge seiner in sich geschlossenen Ausgestaltung in radialer Richtung praktisch steif ist. Diese Steifheit des Grundkörpers gewährleistet, dass bei Veränderung der Konizität der membranartigen Feder die radialen Ausleger auf Knickung beansprucht werden können.

Für manche Anwendungsfälle kann es jedoch auch zweckmäßig sein, wenn die membranartige Feder einen radial äußeren ringartigen Grundkörper aufweist und radial nach innen verlaufende Ausleger. Dabei können diese Ausleger fest bzw. praktisch starr mit der Tellerfeder, insbesondere den Tellerfederzungen, verbunden sein. Der äußere ringartige Grundkörper kann dann lediglich verschwenkbar am Deckel axial gehaltert sein.

In vorteilhafter Weise können die Ausleger dreieckartig ausgebildet sein. Die Ausleger können zur Abstimmung ihrer radialen Federeigenschaften bzw. Federeigenschaften bei Beanspruchung auf Knickung zumindest einen Ausschnitt aufweisen. Der Ausschnitt kann dabei in vorteilhafter Weise derart ausgestaltet sein, dass zumindest zwei blattfederartige Bereiche gebildet werden, die radial innen mit dem ringartigen Grundkörper verbunden sind. Die blattfederartigen Bereiche können in vorteilhafter Weise radial außen einstückig miteinander verbunden sein. Obwohl die Ausleger in Bezug auf die Materialdicke praktisch eben ausgebildet sein können, kann es besonders zweckmäßig sein, wenn diese zumindest eine geringe Wellung in radialer Richtung aufweisen. Eine derartige Wellung begünstigt die radial elastische Verformung bzw. radial elastische Knickung der Ausleger.

In vorteilhafter Weise kann der ringförmige Grundkörper derart bemessen sein, dass dieser Abstützbereiche der Tellerfederzungen für eine Betätigungseinrichtung umschließt. Diese Abstützbereiche sind an den radial nach innen gerichteten Tellerfederzungen vorgesehen, welche von dem radial äußeren, ringförmigen Tellerfedergrundkörper, der als Energiespeicher dient, ausgehen. Die erfindungsgemäß angeordnete und ausgebildete membranartige Feder kann insbesondere in Zusammenhang mit so genannten selbstnachstellenden Reibungskupplungen Verwendung finden, die eine zumindest den Verschleiß an den Reibbelägen automatisch kompensierende Nachstelleinrichtung aufweisen. Die Druckplatte kann in einfacher Weise mit dem Kupplungsdeckel bzw. -gehäuse über axial elastisch verformbare, blattfederartige Elemente verbunden sein.

Die membranartige Feder kann in vorteilhafter Weise derart in die Reibungskupplung verbaut sein, dass sie beim Ausrücken der Reibungskupplung zumindest über einen Teilbereich des Ausrückvorganges eine diesen Vorgang unterstützende Kraft erzeugt.

Um den gewünschten Betätigungskraftverlauf für die Reibungskupplung zu erhalten, kann es weiterhin zweckmäßig sein, wenn die in Verbindung mit der Reibungskupplung zum Einsatz kommende Kupplungsscheibe zwischen ihren Reibbelägen eine so genannte Belagfederung aufweist, welche über einen Teilbereich des Kupplungsausrückvorganges diesen unterstützt. Die Wirkung einer derartigen Belagfederung und der membranartigen Feder überlagern sich.

Für den Aufbau und die Funktion einer erfindungsgemäß ausgestalteten Reibungskupplung kann es weiterhin vorteilhaft sein, wenn im eingerückten Zustand der Reibungskupplung sich die membranartige Feder in einer verspannten Lage befindet, in der sie praktisch keine oder aber nur eine verhältnismäßig geringe Kraft in Achsrichtung der Reibungskupplung aufbringt. Bei Vorhandensein einer geringen Kraft kann diese zur Tellerfeder derart parallel wirksam sein, dass sie entweder in Einrückrichtung oder in Ausrückrichtung der Reibungskupplung wirkt. Zweckmäßig ist es, wenn, ausgehend vom eingerückten Zustand der Reibungskupplung, die membranartige Feder über wenigstens einen Teilbereich des zum Ausrücken der Kupplung erforderlichen Ausrückweges zunächst einen ansteigenden, also positiven Kraft-Weg-Verlauf besitzt. Dieser Kraft-Weg-Verlauf kann also über den Ausrückweg ein Maximum erreichen und falls gewünscht, dann einen abnehmenden bzw. negativen Verlauf aufweisen.

Für den Aufbau und die Funktion der Reibungskupplung kann es weiterhin vorteilhaft sein, wenn die Tellerfeder zumindest über einen Teil des Ausrückweges der Reibungskupplung einen abfallenden Kraft-Weg-Verlauf besitzt, wobei beim Ausrücken der Reibungskupplung die Druckplatte einen Weg zurücklegt, der in zwei Teilabschnitte unterteilt ist, wobei im ersten Teilabschnitt die von der Druckplatte auf die Kupplungsscheibe ausgeübte Beaufschlagungskraft abgebaut wird und im zweiten Teilabschnitt ein axiales Spiel zwischen der Kupplungsscheibe und der Druckplatte sowie dem Schwungrad entsteht, wobei die membranartige Feder zumindest im ersten Teilabschnitt wirksam ist. Die membranartige Feder kann jedoch in vorteilhafter Weise bezüglich ihres Federweges auch derart ausgelegt werden, dass sie zumindest über einen Teilbereich des zweiten Teilabschnittes ebenfalls wirksam ist.

Anstatt, wie beschrieben, die membranartige Feder in die Reibungskupplung derart zu integrieren, dass diese zumindest über einen Teilbereich des Kupplungsausrückweges den Ausrückvorgang der Reibungskupplung unterstützt, kann es für manche Anwendungsfälle auch zweckmäßig sein, wenn die membranartige Feder, ausgehend vom eingerückten Zustand der Reibungskupplung, zumindest über einen Teilbereich des Ausrückweges eine parallel zur Tellerfeder wirksame Kraft aufbringt, welche sich dem Ausrücken der Reibungskupplung widersetzt. Dies bedeutet also, dass eine derart eingebaute, membranartige Feder zumindest einen Teil der Anpresskraft, welche von der Druckplatte auf die Kupplungsscheibe ausgeübt wird, aufbringt. Während des Ausrückens der Reibungskupplung soll dann die von der membranartigen Feder ausgeübte axiale Kraft zumindest über einen Teilbereich des Ausrückweges abnehmen. Auch durch eine derartige Auslegung bzw. Abstimmung der membranartigen Feder in Bezug auf die Tellerfeder kann eine Egalisierung des resultierenden Ausrückkraftverlaufes erzielt werden. Bei einer derartigen Auslegung addieren sich also zumindest über einen Teilbereich des Ausrückweges die Axialkraftverläufe der membranartigen Feder und der Tellerfeder. Bei der zuerst beschriebenen Ausführungsform erfolgt praktisch eine Subtraktion der Kräfteverläufe. Dies bedeutet also, dass bei der zuerst beschriebenen Ausführungsform die Tellerfeder an sich ein höheres Anpresskraftmaximum bzw. einen höheren Kraftverlauf aufbringen muss als bei der zuletzt beschriebenen Ausführungsform, bei der die Anpresskraft durch Addition der Kraftverläufe von membranartiger Feder und Tellerfeder gebildet wird.

Weitere Vorteile und zweckmäßige Weiterbildungen und Funktionen des Erfindungsgegenstandes werden in Zusammenhang mit der folgenden Figurenbeschreibung erläutert:

Dabei zeigen:
- Figur 1: eine erfindungsgemäße Reibungskupplung in Draufsicht,
- Figur 2: die obere Hälfte eines entsprechend der Linie II-II der Figur 1 gelegten Schnittes,
- Figur 3: einen Halbschnitt gemäß der Linie II-II der Figur 1 des in Figur 1 in Draufsicht sternartig bzw. dreieckartig ausgebildeten Federelementes,
- Figur 4: das sternförmige bzw. dreieckförmige Federelement in Draufsicht und
- Figur 5: eine andere Ausführungsvariante eines bei einer Reibungskupplung gemäß Fig. 1 einsetzbaren Federelementes.

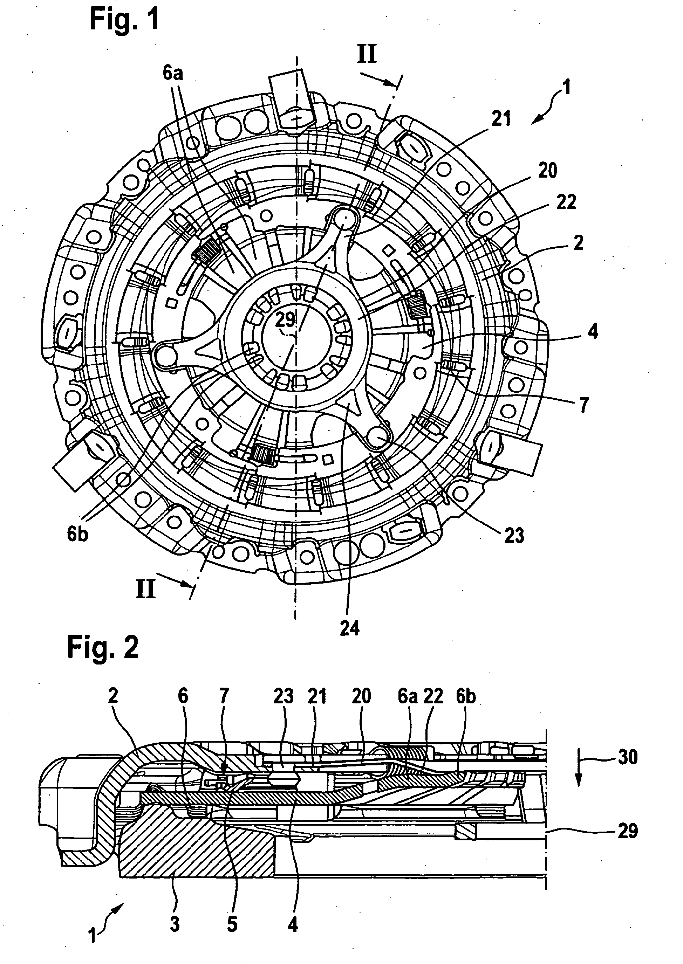

Die in den Figuren 1 und 2 dargestellte Reibungskupplung 1 besitzt bezüglich der Ausgestaltung und Abstützung der Anpresstellerfeder 4 am Kupplungsgehäuse 2 sowie bezüglich der antriebsmäßigen Verbindung zwischen der Druckscheibe 3 und diesem Deckel 2 eine ähnliche Ausgestaltung wie dies in Zusammenhang mit der DE 100 25 850 A1 beschrieben wurde. Auch besitzt die Reibungskupplung 1 eine selbsttätige bzw. automatische Nachstelleinrichtung 7, welche eine Kompensation zumindest des an den Reibbelägen einer Kupplungsscheibe auftretenden Verschleißes ermöglicht. Bei dem hier dargestellten Ausführungsbeispiel ist diese Nachstelleinrichtung axial zwischen dem Kupplungsgehäuse 2 (Deckel) und der Tellerfeder 4 wirksam, so dass der erwähnte Verschleiß durch axiale Nachstellung dieser Tellerfeder 4 ermöglicht wird. Auch bezüglich der Funktionsweise und Ausgestaltungsmöglichkeit derartiger Nachstelleinrichtungen 7 wird auf die vorerwähnte DE 100 25 850 A1 sowie die DE 43 22 677 A1, die DE 195 24 827 A1 und die DE 198 55 583 A1 verwiesen.

Die erfindungsgemäße Verwendung eines im Folgenden noch näher beschriebenen, membranartigen Federelementes 20 kann jedoch ganz allgemein bei Reibungskupplungen erfolgen. Somit können derartige Federelemente 20 auch bei Reibungskupplungen eingesetzt werden, bei denen die Verschleißnachstelleinrichtung axial zwischen der Tellerfeder 4 und der Druckscheibe 3 angeordnet ist. Derartige Kupplungen sind beispielsweise durch die DE 42 39 289 A1 und die DE 199 22 724 A1 vorgeschlagen worden.

Die Druckscheibe 3 ist mit dem Deckel 2 vorzugsweise über blattfederartige Elemente drehfest, jedoch axial begrenzt verlagerbar verbunden, wie dies zum Beispiel durch den vorerwähnten Stand der Technik bekannt ist. Axial zwischen der Druckscheibe 3 und dem Deckel 2 ist die Anpresstellerfeder 4 verspannt, die hier um eine vom Gehäuse 2 getragene, ringartige Schwenklagerung 5 verschwenkbar ist und die Druckscheibe 3 in axialer Richtung einer mit dem Gehäuse 2 fest verbindbaren Gegendruckplatte, wie zum Beispiel einem Schwungrad, beaufschlagt. Dadurch werden die Reibbeläge einer zwischen der Druckscheibe 3 und der mit dem Gehäuse 2 verbundenen Gegendruckplatte vorzusehenden Kupplungsscheibe eingespannt. Aufgrund dieser Einspannung kann die Kupplungsscheibe das von einem Motor abgegebene Drehmoment an ein Getriebe weiterleiten.

Wie aus Figur 2 zu entnehmen ist, wird also die Tellerfeder 4 beim Betätigen der Reibungskupplung 1 nach Art eines zweiarmigen Hebels im Bereich der ringartigen Schwenklagerung 5 verschwenkt.

Die Tellerfeder 4 besitzt einen als Energiespeicher dienenden, ringförmigen Grundkörper 6, von dem radial nach innen gerichtete Zungen 6a ausgehen. Die Zungen 6a besitzen radial innen Zungenspitzen 6b, die eine zentrale Öffnung begrenzen. Zum Betätigen der Reibungskupplung 1 werden die Zungenspitzen 6b von einer Betätigungseinrichtung beaufschlagt. Derartige Betätigungseinrichtungen besitzen üblicherweise ein so genanntes Ausrücklager, welches über einen Lagerring auf die Zungenspitzen 6b die notwendige Betätigungskraft überträgt. Derartige Betätigungsvorrichtungen sind ebenfalls in dem vorerwähnten Stand der Technik beschrieben.

Die Reibungskupplung 1 besitzt, wie bereits erwähnt, ein zusätzliches Federelement 20, welches als membranartige Feder bezeichnet werden kann, da es in Bezug auf die Materialdicke eine große radiale Ausdehnung besitzt.

Die membranartige Feder ist zwischen dem Kupplungsgehäuse bzw. Deckel 2 und Bereichen der Tellerfeder 4 derart angeordnet und befindet sich in einem derartigen verspannten Zustand, dass während einer beim Betätigen der Reibungskupplung 1 stattfindenden Konizitätsveränderung der Tellerfeder 4 diese membranartige Feder sowohl in axialer Richtung als auch in radialer Richtung eine elastische Materialverformung erfährt. Insbesondere wird die membranartige Feder 20 zumindest bereichsweise in axialer Richtung federnd verbogen, wodurch in Bereichen dieser membranartigen Feder auch eine zumindest radiale Materialstauchung bzw. Beanspruchung auf Knickung stattfindet.

Bei dem dargestellten Ausführungsbeispiel ist die membranartige Feder 20 hierfür über radial nach außen verlaufende Ausleger bzw. Arme 21 fest mit dem Gehäuse 2 verbunden und stützt sich über einen inneren Bereich, der hier einen ringartigen Grundkörper 22 bildet, an den Tellerfederzungen 6a ab. Die membranartige Feder 20 kann einstückig ausgebildet oder aus mehreren Elementen zusammengesetzt sein, welche untereinander eine feste Verbindung aufweisen, zum Beispiel mittels Nietverbindungen. Weiterhin kann das membranartige Federelement 20 eine einschichtige Dicke aufweisen oder aber durch Aufeinanderlegen mindestens zweier dünnerer Schichten gebildet sein, vorzugsweise wird zur Herstellung der membranartigen Feder 20 Federstahl verwendet.

Wie insbesondere aus Figur 2 zu entnehmen ist, sind die Ausleger 21 mit dem Gehäuse 2 über Nietverbindungen 23 starr verbunden.

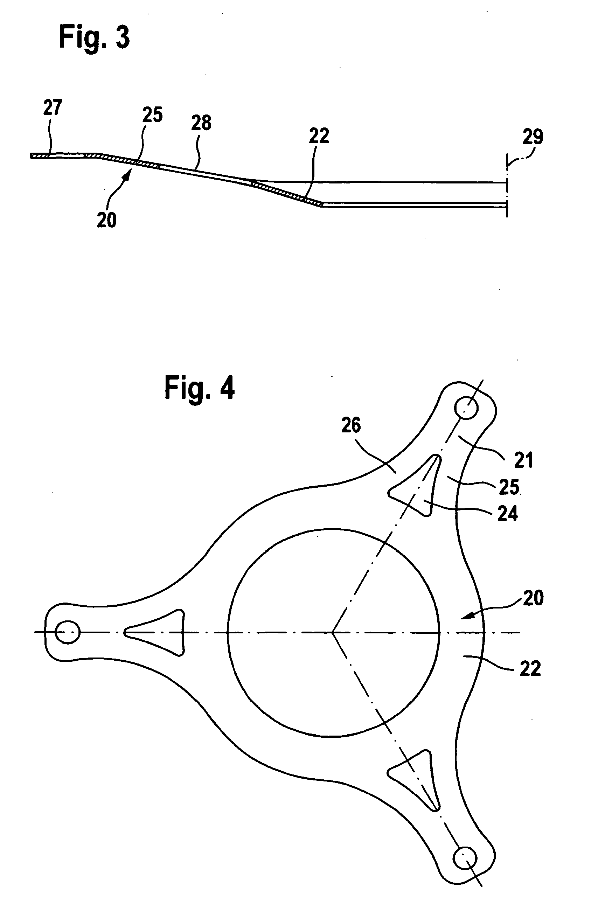

Aus den Figuren 1 und 4 ist zu entnehmen, dass die membranartige Feder 20 drei über den Umfang gleichmäßig verteilte Ausleger 21 aufweist, wobei auch mehr derartige Ausleger vorgesehen werden können. Der ringartige Grundkörper 20 ist hier durchmessermäßig derart bemessen, dass dessen Innenrand an die Zungenspitzen 6b angrenzt.

Die Ausleger 21 sind dreieckartig ausgebildet und radial innen einstückig mit dem ringförmigen Grundkörper 22 verbunden. Bei dem dargestellten Ausführungsbeispiel ist in den Auslegern 21 zumindest ein Ausschnitt 24 eingebracht. Aus Figur 4 ist beispielsweise ersichtlich, dass durch einen Ausschnitt 24 im Bereich eines Auslegers 21 zwei blattfederartige Bereiche 25, 26 gebildet werden, die im Wesentlichen radial verlaufen. Radial außen sind die blattfederartigen Bereiche 25, 26 einstückig miteinander verbunden.

Wie aus dem Schnitt gemäß Figur 3 ersichtlich ist, sind die radial äußeren Vernietungsbereiche 27 eines Auslegers 21 sowie der radial innere, ringförmige Grundkörper 22 gegenüber den übrigen Bereichen 28 der Ausleger 21 abgewinkelt, besitzen also eine andere Konizität. Es ist ersichtlich, dass der ringförmige Grundkörper 22 eine größere Konizität bzw. einen größeren Winkel in axialer Richtung besitzt als die Auslegerbereiche 28, wohingegen die Vernietungsbereiche 27 einen geringeren axialen Winkel besitzen. Im dargestellten Ausführungsbeispiel liegen die Vernietungsbereiche 27 praktisch parallel zu einer gegenüber der Rotationsachse 29 senkrecht verlaufenden Ebene. Aufgrund der starren Verbindung der Nietbereiche 27 mit dem Deckel 2 und der in radialer Richtung starren Ausgestaltung des in sich geschlossenen, ringförmigen Grundkörpers 22 werden die radialen Auslegerbereiche 25, 26, 28 bei Verschwenkung derselben in eine Ebene in radialer Richtung auf Stauchung bzw. Knickung beansprucht.

Durch entsprechende Ausgestaltung der radial verlaufenden Auslegerbereiche 28 bzw. der Ausleger 21 kann der Kraft-Weg-Verlauf der membranartigen Feder 20 auf den jeweiligen Anwendungsfall angepasst werden. Dabei kann die membranartige Feder 20 derart verbaut sein, dass sie zumindest über einen Teilbereich des zum Betätigen der Reibungskupplung 1 erforderlichen Betätigungsweges bzw. Verschwenkweges der Tellerfederzungen 6a eine das Öffnen bzw. Ausrücken der Reibungskupplung 1 unterstützende Kraft in die Reibungskupplung 1 bzw. auf die Tellerfeder 4 einleitet bzw. ausübt.

Das membranartige Bauteil 20 könnte jedoch auch derart ausgebildet und verbaut sein, dass dieses zumindest über einen Teilbereich des Betätigungsweges der Reibungskupplung 1 eine Kraft erzeugt, die dem Ausrücken der Reibungskupplung 1 entgegenwirkt.

Eine membranartige Feder 20 kann auch derart ausgebildet und verbaut werden, dass sie in verschiedenen Teilbereichen des erforderlichen Ausrückweges der Reibungskupplung 1 eine unterschiedlich axial gerichtete Kraft parallel zu dem Kraftverlauf der Tellerfeder 4 entfaltet. Dies bedeutet also, dass über einen Teilbereich des Ausrückweges die membranartige Feder 20 eine den Ausrückvorgang unterstützende Kraft und über einen anderen Teilbereich eine sich dem Ausrückvorgang widersetzende Kraft erzeugen kann. Eine derartige membranartige Feder 20 besitzt also eine Kennlinie mit einem Nulldurchgang im Kraftverlauf.

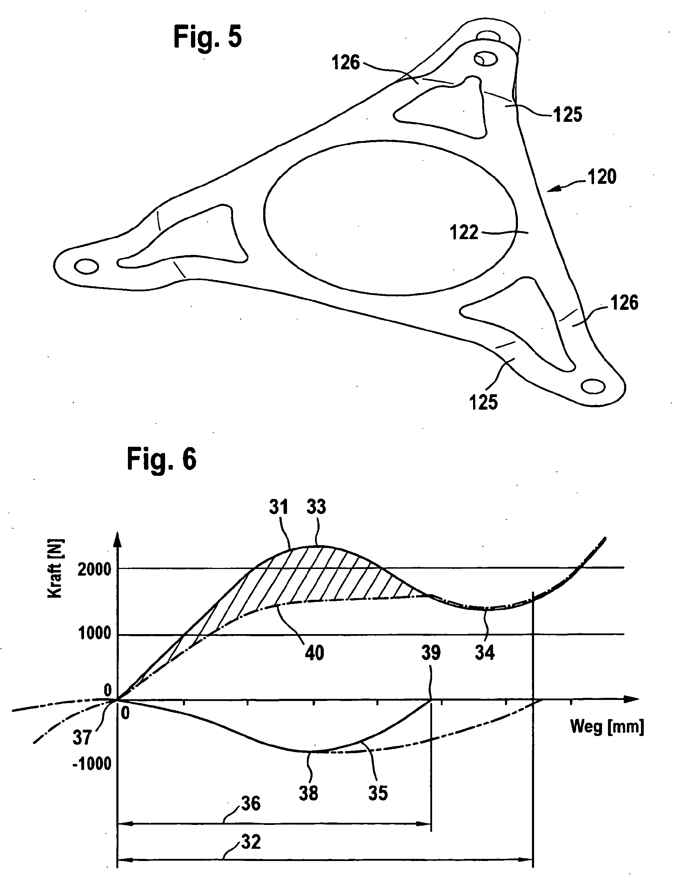

Bei der in Figur 5 dargestellten membranartigen Feder 120 sind die sich vom ringartigen Grundkörper 122 radial nach außen erstreckenden, blattfederartigen Bereiche 125, 126 vorgewellt ausgebildet. Die blattfederartigen Bereiche 125, 126 verlaufen dabei tangentialartig in Bezug auf den ringartigen Grundkörper 122, wodurch die Bereiche 125, 126 in Verbindung mit den Bereichen des ringförmigen Grundkörpers 122 in die sie einlaufen, eine dreieckartige Gestalt bilden.

In Figur 2 ist die Relativposition der einzelnen Bauteile der Reibungskupplung 1 dargestellt, welche diese bei neuer Reibungskupplung und im montierten Zustand derselben auf ein Schwungrad einnehmen. In diesem Verspannungszustand der Tellerfeder 4 innerhalb der Reibungskupplung 1 ist auch die membranartige Feder 20 um einen bestimmten Weg axial vorgespannt. Dies geht aus einem Vergleich der Figur 2 mit Figur 3, welche die membranartige Feder 20 im entspannten Zustand zeigt, eindeutig hervor. Die membranartige Feder 20 ist dabei vorzugsweise derart vorgespannt, dass sie zumindest annähernd auf ihr Federkraftminimum verspannt ist. In dem in Figur 2 dargestellten, eingerückten Zustand der Reibungskupplung 1 soll die von der membranartigen Feder 20 auf die Tellerfeder 4 ausgeübte Axialkraft nahezu Null betragen. Besonders vorteilhaft kann es sein, wenn die membranartige Feder 20 bei eingerückter Kupplung 1 eine geringe Kraft in Ausrückrichtung 30 auf die Tellerfeder 4 ausübt. Dadurch kann gewährleistet werden, dass die membranartige Feder 20 nicht von der Tellerfeder 4 axial wegschnappt. Sofern gewünscht sein sollte, dass im eingerückten Zustand der Reibungskupplung 1 durch die membranartige Feder 20 auf die Tellerfeder 4 eine Axialkraft ausgeübt wird, die der Ausrückrichtung 30 entgegengerichtet ist, muss eine entsprechende axiale Abstützung bzw. schwenkbare Lagerung zum Beispiel der radial inneren Bereiche der membranartigen Feder 20 an den Tellerfederzungen 6a bzw. der Tellerfeder 4 vorgesehen werden. Eine derartige Koppelung zwischen der membranartigen Feder 20 und der Tellerfeder 4 ermöglicht, die membranartige Feder 20 derart zu verbauen, dass diese, über den Ausrückweg der Reibungskupplung betrachtet, eine Umkehrung bezüglich ihrer axialen Kraftwirkung auf die Tellerfeder 4 erfahren kann.

Bei einem Ausrückvorgang der Reibungskupplung 1 wird die membranartige Feder 20 entsprechend dem Ausrückweg entspannt, wobei die von der membranartigen Feder 20 in Ausrückrichtung 30 auf die Tellerfeder 4 ausgeübte Kraft vorzugsweise zunächst zunimmt und nach einem Teilausrückweg diese praktisch als Servokraft wirkende Kraft wieder abfällt bzw. abnimmt. Der Bereich des Teilausrückweges, bei dem der Übergang zwischen zunehmender und abnehmender Kraft stattfindet, kann vorzugsweise in einem Abschnitt des Ausrückweges liegen, bei dem in etwa das Minimum des Ausrückkraftverlaufes erreicht wird. Zweckmäßig kann es sein, wenn auch bei voll ausgerückter Reibungskupplung 1 die membranartige Feder 20 noch mit einer gewissen axialen Vorspannung an den Zungen 6a der Tellerfeder 4 anliegt. Es kann jedoch auch Anwendungsfälle geben, bei denen es vorteilhaft sein kann, wenn während des Ausrückvorganges die membranartige Feder 20 eine voll entspannte Lage einnimmt.

In Figur 6 ist der zum Betätigen der Reibungskupplung 1 notwendige Kraftverlauf 31 dargestellt, welcher zum Verschwenken der Tellerfeder 4 im Bereich des Durchmessers der Zungenspitzen 6b aufgebracht werden muss.

Zum Ausrücken der Reibungskupplung 1 müssen die Zungenspitzen 6b zum Beispiel mittels eines Ausrückers um einen Betätigungsweg 32 in Richtung des Pfeiles 30, gemäß Figur 2, axial verlagert werden. Aus dem Ausrückkraftverlauf gemäß der Linie 31 der Figur 4 ist ersichtlich, dass über den Gesamtausrückweg 32 betrachtet, zwischen Ausrückkraftmaximum 33 und Ausrückkraftminimum 34 der Tellerfeder 4 eine verhältnismäßig große Differenz bzw. Kraftstreuung vorhanden ist. Eine derartige große Differenz zwischen Ausrückkraftmaximum 33 und Ausrückkraftminimum 34 kann von Nachteil sein, da eine genaue Dosierung des Ein- und Ausrückweges schwierig ist, dies sowohl bei fußbetätigten als auch insbesondere bei über einen Stellmotor betätigten Reibungskupplungen. Um diesen in vielen Fällen nachteiligen Sachverhalt zu beseitigen bzw. um einen gewünschten Ausrückkraftverlauf über den erforderlichen Ausrückweg 32 zu erhalten, ist die membranartige Feder 20 vorgesehen. Diese membranartige Feder 20 hat bei dem dargestellten Ausführungsbeispiel eine Kraft-Weg-Kennlinie gemäß der Linie 35.

Wie aus Figur 6 ersichtlich ist, erzeugt die membranartige Feder 20 über einen Teilbereich 36 des Gesamtausrückweges 32 eine den Ausrückvorgang der Reibungskupplung 1 unterstützende Kraft. Die Tellerfeder 4 und die membranartige Feder 20 haben dabei gegenüber der Abszissenachse einen gegensinnigen Kraft-Weg-Verlauf. Wie bereits erwähnt, befindet sich die membranartige Feder 20 im eingerückten Zustand der Reibungskupplung 1 vorzugsweise in einer verspannten Lage, die in etwa einem Kraftminimum 37 entspricht. Besonders zweckmäßig kann es sein, wenn in dieser verspannten Lage die membranartige Feder 20 noch eine Restkraft bzw. eine positive Kraft in Ausrückrichtung, also in Richtung des Pfeiles 30 gemäß Figur 2 bewirkt. Über den Weg 36 entspannt sich die membranartige Feder 20, wobei zunächst die von dieser aufgebrachte Axialkraft zunimmt, und zwar bis zu einem Maximum 38. Bei Überschreitung dieses Maximums 38 nimmt die von der membranartigen Feder 20 aufgebrachte Axialkraft wieder ab. Beim Erreichen des Punktes 39 ist bei dem hier dargestellten Ausführungsbeispiel die membranartige Feder 20 voll entspannt. Die membranartige Feder 20 kann jedoch, wie bereits erwähnt, auch derart ausgestaltet und eingebaut sein, dass sie auch nach Durchfahren des vollen Ausrückweges 32 noch eine gewisse Vorspannung aufweist bzw. erst bei Erreichen des vollen Ausrückweges 32 voll entspannt ist. Eine entsprechende Kraft-Weg-Kennlinie für eine solche Feder ist in Figur 6 als Strich-Zweipunktlinie 35a dargestellt.

Der Kraftverlauf, der sich durch Überlagerung bzw. Subtraktion der Kennlinien 31 und 35 ergibt, ist mit 40 gekennzeichnet. Wie aus Figur 6 ersichtlich ist, kann durch die Überlagerung 40 der Kennlinien 31 und 35 das Niveau des Ausrückkraftverlaufes wesentlich reduziert werden. Der Einsatz einer hier als Servofeder wirkenden, membranartigen Feder 20 ermöglicht den Ausrückkraftverlauf zu linearisieren bzw. zu egalisieren und gleichzeitig in den Bereich geringerer Kräfte zu verlagern. Es ist aus Figur 6 ersichtlich, dass durch die Wirkung der membranartigen Feder 20 die Überhöhung 33 im Ausrückkraftverlauf vermieden werden kann.

Weiterhin entfällt die durch das schraffierte Feld repräsentierte Arbeit bzw. Energie. Durch die erfindungsgemäße Ausgestaltung kann also ein kleinerer Servomotor für die Betätigung der Reibungskupplung 1 eingesetzt werden.

Bei dem dargestellten Ausführungsbeispiel ist die membranartige Feder 20 verspannt zwischen dem Kupplungsdeckel 2 und der Tellerfeder 4. Infolge dieser Anordnung verändert sich über die Lebensdauer der Reibungskupplung 1 der Verspannungszustand dieser membranartigen Feder 20. Dies ist darauf zurückzuführen, dass bei dem dargestellten Ausführungsbeispiel die zumindest den Reibbelagverschleiß kompensierende Nachstelleinrichtung 7 zwischen Kupplungsdeckel 2 und der Tellerfeder 4 wirksam ist, wodurch die Tellerfeder entsprechend dem Belagverschleiß über die Lebensdauer der Reibungskupplung axial verlagert wird. Eine derartige Anordnung kann in vielen Fällen zweckmäßig sein, da mit zunehmender axialer Verlagerung der Anpressplatte 3 gegenüber dem Gehäuse 2 auch die zwischen diesen Bauteilen 2 und 3 vorhandenen Blattfedern eine größer werdende Verspannung in axialer Richtung erfahren können. Die Erhöhung der von den Blattfedern auf die Anpressplatte 3 ausgeübte Axialkraft in Ausrückrichtung kann somit die Veränderung des Verspannungszustandes der membranartigen Feder 20 zumindest teilweise ausgleichen bzw. den gewünschten, resultierenden Kraftverlauf gewährleisten.

Die im Rahmen der vorliegenden Anmeldung beschriebenen, membranartigen Federn 20 können jedoch auch derart vorgesehen werden, dass sie über die gesamte Lebensdauer der Reibungskupplung praktisch immer den gleichen Arbeitsbereich bzw. im eingerückten Zustand der Reibungskupplung den gleichen Verspannungszustand aufweisen. Bei Reibungskupplungen, bei denen die Tellerfeder 4 axial fest gegenüber dem Kupplungsdeckel 2 verschwenkbar, und eine Verschleißausgleichsvorrichtung axial zwischen der Tellerfeder 4 und der Anpressplatte 3 wirksam ist, besitzt eine gemäß dem dargestellten Ausführungsbeispiel zwischen Kupplungsdeckel 2 und Tellerfeder 4 verspannte, membranartige Feder 20 über die gesamte Lebensdauer der Reibungskupplung 1 praktisch den gleichen Verspannungszustand im eingerückten Zustand dieser Kupplung.

Bei dem dargestellten Ausführungsbeispiel könnte ein zumindest im Wesentlichen gleich bleibender Verspannungszustand einer membranartigen Feder 20 dadurch gewährleistet werden, dass die membranartige Feder 20 zum Beispiel über ihre radial äußeren Bereiche 27 axial fest gegenüber der Tellerfeder 4 gehaltert wird. Besonders zweckmäßig kann es dabei sein, wenn die axiale Festlegung der äußeren Bereiche 27 einer membranartigen Feder 20 zumindest annähernd auf radialer Höhe der ringförmigen Verschwenklagerung 5 stattfindet. Die radial äußeren Bereiche 27 sind dabei vorzugsweise derart sowohl in radialer als auch in axialer Richtung gegenüber der Tellerfeder 4 positioniert, dass diese Bereiche 27 nicht starr mit der Tellerfeder 4 verbunden sind, sondern eine praktisch ungehinderte Konizitätsveränderung bzw. Verschwenkung der membranartigen Feder 20 auch gegenüber der Tellerfeder 4 gewährleisten.

### Bezugszeichenliste

- 1: Reibungskupplung
- 2: Gehäuse
- 3: Druckscheibe
- 4: Anpresstellerfeder
- 5: Schwenklagerung
- 6: Grundkörper
- 6a: Zungen
- 6b: Zungenspitzen
- 7: Nachstelleinrichtung
- 20: membranartige Feder
- 21: Ausleger bzw. Arme
- 22: Grundkörper
- 23: Nietverbindungen
- 24: Ausschnitt
- 25: blattfederartige Bereiche
- 26: blattfederartige Bereiche
- 27: Vernietungsbereiche
- 28: Auslegerbereiche
- 29: Rotationsachse
- 30: Ausrückrichtung
- 31: Kraftverlauf
- 32: Betätigungsweg
- 33: Ausrückkraftminimum
- 34: Ausrückkraftminimum
- 35: Linie
- 36: Teilbereich
- 37: Kraftminimum
- 38: Maximum
- 39: Punkt
- 120: Feder
- 122: Grundkörper
- 125: blattfederartige Bereiche
- 126: blattfederartige Bereiche

## Patentansprüche

1. Reibungskupplung, insbesondere für Kraftfahrzeuge, mit einer gegenüber einem Gehäuse drehfesten, jedoch axial begrenzt verlagerbaren Druckplatte (3), die über eine am Gehäuse (2) verschwenkbar abgestützt Tellerfeder (4) in Richtung einer im montierten Zustand der Reibungskupplung auf einem Schwungrad zwischen Letzterem und der Druckplatte (3) angeordneten Kupplungsscheibe beaufschlagbar ist, wobei zumindest ein weiteres Federelement (20,120) vorhanden ist, welches beim Betätigen der Reibungskupplung zumindest über einen Teilbereich des Betätigungsvorganges den zum Betätigen der Reibungskupplung notwendigen Kraftverlauf beeinflusst, **dadurch gekennzeichnet, dass** das weitere Federelement (20,120) durch wenigstens eine membranartige Feder gebildet ist, die einerseits am Gehäuse (2) und andererseits an der Tellerfeder (4) derart abgestützt ist, dass während einer beim Betätigen der Reibungskupplung stattfindenden Konizitätsveränderung der Tellerfeder (4) die membranartige Feder sowohl in axialer Richtung als auch in radialer Richtung eine elastische Materialverformung erfährt.

2. Reibungskupplung nach Anspruch 1, **dadurch gekennzeichnet, dass** die membranartige Feder mit radial äußeren Bereichen am Deckel fest verbunden ist und mit radial inneren Bereichen an radial nach innen gerichteten Zungen der Tellerfeder (4) abgestützt sind.

3. Reibungskupplung nach Anspruch 1 oder 2, **dadurch gekennzeichnet, dass** die membranartige Feder einen in sich geschlossenen, ringartigen Bereich besitzt, von dem radial hervorstehende Abschnitte ausgehen, welche infolge einer Konizitätsveränderung der Tellerfeder zumindest in radialer Richtung auf elastische Knickung beansprucht werden.

4. Reibungskupplung nach einem der Ansprüche 1 bis 3. **dadurch gekennzeichnet, dass** die membranartige Feder einen in sich geschlossenen, ringartigen Grundkörper aufweist, von dem zumindest drei sternartig über den Umfang des Grundkörpers verteilte und radial nach außen verlaufende Ausleger ausgehen, welche radial außen mit dem Kupplungsgehäuse fest verbunden sind.

5. Reibungskupplung nach Anspruch 4, **dadurch gekennzeichnet, dass** die Ausleger dreieckartig ausgebildet sind.

6. Reibungskupplung nach Anspruch 4 oder 5, **dadurch gekennzeichnet, dass** die Ausleger einen Ausschnitt aufweisen, so dass zumindest zwei blattfederartige Bereiche gebildet sind, die radial innen mit dem ringartigen Grundkörper verbunden sind.

7. Reibungskupplung nach Anspruch 6, **dadurch gekennzeichnet, dass** die jeweiligen zwei blattfederartigen Bereiche radial außen miteinander verbunden sind.

8. Reibungskupplung nach einem der Ansprüche 4 bis 7, **dadurch gekennzeichnet, dass** die Ausleger zumindest in radialer Richtung eine Wellung aufweisen.

9. Reibungskupplung nach einem der Ansprüche 3 bis 8, **dadurch gekennzeichnet, dass** die Tellerfeder einen äußeren ringförmigen Grundkörper besitzt, von dem aus radial nach innen gerichtete Zungen ausgehen, wobei die Zungen radial innen Abstützbereiche für eine Betätigungseinrichtung bilden und der ringförmige Grundkörper der membranartigen Feder diese Bereiche umschließt.

10. Reibungskupplung nach einem der Ansprüche 1 bis 9, **dadurch gekennzeichnet, dass** die Reibungskupplung eine zumindest den Verschleiß an den Reibbelägen automatisch kompensierende Nachstelleinrichtung aufweist.

11. Reibungskupplung nach einem der Ansprüche 1 bis 10, **dadurch gekennzeichnet, dass** die Druckplatte mit dem Kupplungsgehäuse über axial elastisch verformbare, blattfederartige Elemente verbunden ist.

12. Reiburigskupplung nach einem der Ansprüche 1 bis 11, **dadurch gekennzeichnet, dass** die membranartige Feder beim Ausrücken der Reibungskupplung zumindest über einen Teilbereich des Ausrückvorganges eine diesen Vorgang unterstützende Kraft erzeugt.

13. Reibungskupplung nach einem der Ansprüche 1 bis 12, **dadurch gekennzeichnet, dass** die mit der Reibungskupplung zusammenwirkende Kupplungsscheibe zwischen ihren Reibbelägen eine Belagfederung aufweist, welche über einen Teilbereich des Kupplungsausrückvorganges diesen unterstützt.

14. Reibungskupplung nach einem der Ansprüche 1 bis 13, **dadurch gekennzeichnet, dass** sich die membranartige Feder im eingerückten Zustand der Reibungskupplung in einer verspannten Lage befindet, in der sie praktisch keine in Achsrichtung der Reibungskupplung wirkende Kraft aufbringt.

15. Reibungskupplung nach einem der Ansprüche 1 bis 13, **dadurch gekennzeichnet, dass** sich die membranartige Feder im eingerückten Zustand der Reibungskupplung in einer verspannten Lage befindet, in der sie eine verhältnismäßig geringe Kraft in Achsrichtung der Reibungskupplung aufbringt.

16. Reibungskupplung nach einem der Ansprüche 1 bis 15, **dadurch gekennzeichnet, dass** die membranartige Feder im eingerückten Zustand der Reibungskupplung eine Kraft in Ausrückrichtung der Kupplung auf die Tellerfeder ausübt.

17. Reibungskupplung nach einem der Ansprüche 1 bis 16, **dadurch gekennzeichnet, dass** die Tellerfeder zumindest über einen Teil des Ausrückweges der Reibungskupplung einen abfallenden Kraft-Weg-Verlauf besitzt, wobei beim Ausrücken der Reibungskupplung die Druckplatte einen Ausrückweg zurücklegt, der in zwei Teilabschnitte unterteilt ist, wobei im ersten Teilabschnitt die von der Druckplatte auf die Kupplungsscheibe ausgeübte Beaufschlagungskraft abgebaut wird und im zweiten Teilabschnitt ein axiales Spiel zwischen der Kupplungsscheibe und der Druckplatte sowie dem Schwungrad entsteht, wobei die membranartige Feder zumindest im ersten Teilabschnitt wirksam ist.

18. Reibungskupplung nach Anspruch 17, **dadurch gekennzeichnet, dass** die membranartige Feder auch über zumindest einen Teilbereich des zweiten Teilabschnittes wirksam ist.

19. Reibungskupplung nach einem der Ansprüche 1 bis 18, **dadurch gekennzeichnet, dass** die membranartige Feder, ausgehend vom eingerückten Zustand der Reibungskupplung und über den Ausrückweg betrachtet, zunächst einen ansteigenden Kraft-Weg-Verlauf besitzt, der während des Ausrückvorganges in einen abnehmenden Kraft-Weg-Verlauf übergeht.

## Claims

1. Friction clutch, in particular for motor vehicles, having a pressure plate (3) which is rotationally fixed yet axially movable to a limited extend relative to a housing and which can be acted on, by means of a plate spring (4) which is supported in a pivotable fashion on the housing (2), in the direction of a clutch disc which, in the assembled state of the friction clutch, is arranged on a flywheel between the latter and the pressure plate (3), with at least one further spring element (20, 120) being provided which, during the actuation of the friction clutch, influences the force profile necessary for actuating the friction clutch at least over a partial range of the actuating process, **characterized in that** the further spring element (20, 120) is formed by at least one diaphragm-like spring which is supported at one side on the housing (2) and at the other side on the plate spring (4) such that, during a change in conicity of the plate spring (4) which takes place during the actuation of the friction clutch, the diaphragm-like spring undergoes an elastic material deformation both in the axial direction and also in the radial direction.

2. Friction clutch according to Claim 1, **characterized in that** the diaphragm-like spring is fixedly connected by means of radially outer regions to the cover and is supported by means of radially inner regions on radially inwardly aligned tongues of the plate spring (4).

3. Friction clutch according to Claim 1 or 2, **characterized in that** the diaphragm-like spring has a closed annular region from which extend radially projecting sections which, as a result of the change in conicity of the plate spring, undergo elastic flexing at least in the radial direction.

4. Friction clutch according to one of Claims 1 to 3, **characterized in that** the diaphragm-like spring has a closed annular base body from which extend at least three arms which are distributed in a stellate fashion over the periphery of the base body and which run radially outwards and which are fixedly connected radially at the outside to the clutch housing.

5. Friction clutch according to Claim 4, **characterized in that** the arms are triangular in shape.

6. Friction clutch according to Claim 4 or 5, **characterized in that** the arms have a cutout so as to form at least two leaf-spring-like regions which are connected radially at the inside to the annular base body.

7. Friction clutch according to Claim 6, **characterized in that** the respective two leaf-spring-like regions are connected to one another radially at the outside.

8. Friction clutch according to one of Claims 4 to 7, **characterized in that** the arms have a corrugation at least in the radial direction.

9. Friction clutch according to one of Claims 3 to 8, **characterized in that** the plate spring has an outer annular base body from which extend radially inwardly aligned tongues, with the tongues forming, radially at the inside, support regions for an actuating device, and with the annular base body of the diaphragm-like spring surrounding said regions.

10. Friction clutch according to one of Claims 1 to 9, **characterized in that** the friction clutch has an adjusting device which automatically compensates at least the wear to the friction linings.

11. Friction clutch according to one of Claims 1 to 10, **characterized in that** the pressure plate is connected to the clutch housing by means of axially elastically deformable leaf-spring-like elements.

12. Friction clutch according to one of Claims 1 to 11, **characterized in that** the diaphragm-like spring, during the disengagement of the friction clutch, generates a force which assists the disengagement process at least over a partial range of said process.

13. Friction clutch according to one of Claims 1 to 12, **characterized in that** the clutch disc which interacts with the friction clutch has, between its friction linings, a lining suspension arrangement which assists the clutch disengagement process over a partial range of said process.

14. Friction clutch according to one of Claims 1 to 13, **characterized in that**, in the engaged state of the friction clutch, the diaphragm-like spring is in a braced position in which it imparts practically no force acting in the axial direction of the friction clutch.

15. Friction clutch according to one of Claims 1 to 13, **characterized in that**, in the engaged state of the friction clutch, the diaphragm-like spring is in a braced position in which it imparts a relatively small force in the axial direction of the friction clutch.

16. Friction clutch according to one of Claims 1 to 15, **characterized in that**, in the engaged state of the friction clutch, the diaphragm-like spring exerts a force on the plate spring in the disengagement direction of the clutch.

17. Friction clutch according to one of Claims 1 to 16, **characterized in that** the plate spring has a falling force-travel profile at least over a part of the disengagement travel of the friction clutch, wherein during the disengagement of the friction clutch, the pressure plate covers a disengagement path which is divided into two partial sections, with the load force exerted by the pressure plate on the clutch disc being depleted in the first partial section and with an axial play between the clutch disc and the pressure plate and also the flywheel being generated in the second partial section, with the diaphragm-like spring acting at least in the first partial section.

18. Friction clutch according to Claim 17, **characterized in that** the diaphragm-like spring also acts over at least a partial range of the second partial section.

19. Friction clutch according to one of Claims 1 to 18, **characterized in that** the diaphragm-like spring, as viewed proceeding from the engaged state of the friction clutch and over the disengagement travel, has firstly a rising force-travel profile which merges into a falling force-travel profile during the disengagement process.

## Revendications

1. Embrayage à friction, en particulier pour des véhicules automobiles, comportant un plateau de pression (3), fixe en rotation mais déplaçable axialement de manière limitée par rapport à un boîtier, qui peut être poussé au moyen d'une rondelle élastique (4) appuyée de manière pivotante sur le boîtier (2) en direction d'un disque d'embrayage disposé, à l'état monté de l'embrayage à friction, sur une roue volante entre cette dernière et le plateau de pression (3), dans lequel il est prévu au moins un autre élément de ressort (20, 120) qui, lors de l'actionnement de l'embrayage à friction, influence l'évolution de la force nécessaire pour l'actionnement de l'embrayage à friction au moins pendant une partie de l'opération d'actionnement, **caractérisé en ce que** l'autre élément de ressort (20, 120) est formé par au moins un ressort en forme de membrane, qui prend appui d'une part sur le boîtier (2) et d'autre part sur la rondelle élastique (4), de telle manière que, pendant un changement de conicité de la rondelle élastique (4) qui se produit lors d'un actionnement de l'embrayage à friction, le ressort en forme de membrane subisse une déformation de matière élastique aussi bien en direction axiale qu'en direction radiale.

2. Embrayage à friction selon la revendication 1, **caractérisé en ce que** le ressort en forme de membrane est assemblé solidairement au couvercle par des régions radialement extérieures et prend appui par des régions radialement intérieures sur des lamelles de la rondelle élastique (4) dirigées radialement vers l'intérieur.

3. Embrayage à friction selon la revendication 1 ou 2, **caractérisé en ce que** le ressort en forme de membrane comporte une zone annulaire, fermée en soi, de laquelle partent des segments radialement saillants qui, par suite d'un changement de conicité de la rondelle élastique, sont sollicités en flambage élastique au moins en direction radiale.

4. Embrayage à friction selon l'une quelconque des revendications 1 à 3, **caractérisé en ce que** le ressort en forme de membrane comprend un corps de base annulaire, fermé en soi, duquel partent au moins trois branches réparties en forme d'étoile sur la périphérie du corps de base et dirigées radialement vers l'extérieur, qui sont assemblées de façon fixe, radialement à l'extérieur, au boîtier de l'embrayage.

5. Embrayage à friction selon la revendication 4, **caractérisé en ce que** les branches sont de forme triangulaire.

6. Embrayage à friction selon la revendication 4 ou 5, **caractérisé en ce que** les branches présentent une découpe, de façon à former au moins deux régions en forme de lame de ressort, qui sont assemblées radialement à l'intérieur au corps de base annulaire.

7. Embrayage à friction selon la revendication 6, **caractérisé en ce que** les deux régions respectives en forme de lames de ressort sont reliées l'une à l'autre radialement à l'extérieur.

8. Embrayage à friction selon l'une quelconque des revendications 4 à 7, **caractérisé en ce que** les branches présentent une ondulation au moins en direction radiale.

9. Embrayage à friction selon l'une quelconque des revendications 3 à 8, **caractérisé en ce que** la rondelle élastique comporte un corps de base annulaire extérieur, duquel partent des lamelles dirigées radialement vers l'intérieur, dans lequel les lamelles forment des zones d'appui radialement intérieures pour un dispositif d'actionnement et le corps de base annulaire du ressort en forme de membrane entoure ces zones.

10. Embrayage à friction selon l'une quelconque des revendications 1 à 9, **caractérisé en ce que** l'embrayage à friction présente un dispositif de rattrapage destiné à compenser automatiquement au moins l'usure sur les garnitures de friction.

11. Embrayage à friction selon l'une quelconque des revendications 1 à 10, **caractérisé en ce que** le plateau de pression est assemblé au boîtier de l'embrayage au moyen d'éléments en forme de lames de ressort, déformables élastiquement en direction axiale.

12. Embrayage à friction selon l'une quelconque des revendications 1 à 11, **caractérisé en ce que** le ressort en forme de membrane produit, lors du débrayage de l'embrayage à friction, une force assistant l'opération de débrayage au moins pendant une partie de celle-ci.

13. Embrayage à friction selon l'une quelconque des revendications 1 à 12, **caractérisé en ce que** le disque d'embrayage coopérant avec l'embrayage à friction présente entre ses garnitures de friction un appui élastique des garnitures, qui assiste l'opération de débrayage de l'embrayage pendant une partie de celle-ci.

14. Embrayage à friction selon l'une quelconque des revendications 1 à 13, **caractérisé en ce que** le ressort en forme de membrane se trouve, à l'état embrayé de l'embrayage à friction, dans une position serrée, dans laquelle il n'exerce pratiquement aucune force agissant dans la direction de l'axe de l'embrayage à friction.

15. Embrayage à friction selon l'une quelconque des revendications 1 à 13, **caractérisé en ce que** le ressort en forme de membrane se trouve, à l'état embrayé de l'embrayage à friction, dans une position serrée, dans laquelle il exerce une force relativement faible dans la direction de l'axe de l'embrayage à friction.

16. Embrayage à friction selon l'une quelconque des revendications 1 à 15, **caractérisé en ce que** le ressort en forme de membrane exerce sur la rondelle élastique, à l'état embrayé de l'embrayage à friction, une force dans la direction de débrayage de l'embrayage.

17. Embrayage à friction selon l'une quelconque des revendications 1 à 16, **caractérisé en ce que** la rondelle élastique présente une courbe force-course descendante au moins sur une partie de la course de débrayage de l'embrayage à friction, dans lequel le plateau de pression parcourt, pendant le débrayage de l'embrayage à friction, une course de débrayage qui est divisée en deux segments partiels, dans lequel la force de sollicitation exercée par le plateau de pression sur le disque d'embrayage diminue dans le premier segment partiel et il apparaît un jeu axial entre le disque d'embrayage et le plateau de pression et la roue volante dans le deuxième segment partiel, dans lequel le ressort en forme de membrane est actif au moins dans le premier segment partiel.

18. Embrayage à friction selon la revendication 17, **caractérisé en ce que** le ressort en forme de membrane est également actif au moins sur une partie du deuxième segment partiel.

19. Embrayage à friction selon l'une quelconque des revendications 1 à 18, **caractérisé en ce que** le ressort en forme de membrane, considéré à partir de l'état embrayé de l'embrayage à friction et sur la course de débrayage, présente d'abord une courbe force-course ascendante, qui se transforme en une courbe force-course descendante pendant l'opération de débrayage.
